# EUROPÄISCHE PATENTSCHRIFT

(11) **EP 4 577 873 B1**
(45) Veröffentlichungstag und Bekanntmachung des Hinweises auf die Patenterteilung: **11.03.2026**
(21) Anmeldenummer: 23834085.5
(22) Anmeldetag: 18.12.2023
(51) Int. Cl.: G02C 13/00, G01M 11/00, G01B 11/24, G01M 11/02

(54) **VERFAHREN UND VORRICHTUNG ZUR MESSUNG DES FASSUNGSSCHEIBENWINKELS EINER BRILLE UND COMPUTERPROGRAMMPRODUKT**
METHOD AND DEVICE FOR MEASURING THE FRAME LENS ANGLE OF SPECTACLES, AND COMPUTER PROGRAM PRODUCT
PROCÉDÉ ET DISPOSITIF DE MESURE DE L'ANGLE DE CINTRE DE MONTURE D'UNE PAIRE DE LUNETTES ET PRODUIT PROGRAMME D'ORDINATEUR

(30) Priorität: 20.01.2023 DE 102023200424
(43) Veröffentlichungstag der Anmeldung: 02.07.2025
(73) Patentinhaber: Rodenstock GmbH, 80687 München (DE)
(72) Erfinder: HAUK, Wolfgang, 86156 Augsburg (DE); GROMANN, Lukas, 85354 Freising (DE)
(74) Vertreter: Müller-Boré & Partner Patentanwälte PartG mbB
(86) Internationale Anmeldenummer: PCT/EP2023/086424
(87) Internationale Veröffentlichungsnummer: WO 2024/153419

(56) Entgegenhaltungen:
- DE-A1- 102014 005 281
- DE-A1- 102016 009 810
- DE-B3- 102021 213 602

## Beschreibung

Die Erfindung betriff ein Verfahren und Vorrichtung zur Messung des Fassungsscheibenwinkels einer Brille und ein Computerprogrammprodukt.

Zur Vermessung und Überprüfung des Fassungsscheibenwinkels ist es bekannt, die Oberfläche einer fertigen Brille mittels eines Laser-Abscan-Vorgangs zu überprüfen. Dazu kann z.B. der Rodenstock Centering Analyzer (Abk.: RCA) verwendet werden. Der RCA umfasst einen Laserscanner, welcher mittels von der Brille reflektierten Laserstrahlen ein Höhenprofil der Brillenoberfläche ermittelt. Aus diesem Höhenprofil kann der Fassungsscheibenwinkel der Brille ermittelt werden.

Der Fassungsscheibenwinkel (Abk.: FSW) ist nach DIN EN ISO 8624 und DIN EN ISO 58208 definiert als der Winkel zwischen der Fassungsebene und der rechten bzw. linken Scheibenebene. Dabei ist die Scheibenebene definiert als die Ebene durch die horizontale und die vertikale Mittellinie im rechten bzw. im linken Kastensystem der Brillenfassung. Die Fassungsebene ist definiert als die Ebene, welche durch die zueinander parallelen vertikalen Mittellinien der die rechte und linke Scheibenebene einer Brillenfassung festlegenden Kastensysteme verläuft. Das Kastensystem ist hierbei ebenfalls in den voranstehend genannten Normen definiert. Der Fassungsscheibenwinkel, die Fassungsebene, die Scheibenebene und das Kastensystem stellen genormte und dem Fachmann geläufige Begriffe dar.

Das Dokument DE 10 2016 009810 A1 offenbart ein Verfahren zur Überprüfung der Zentrierung zumindest eines Brillenglases, wobei das Brillenglas in einem Aufnahmefeld einer Bildaufnahmevorrichtung angeordnet wird. Es wird zumindest ein Bild des Brillenglases mittels der Bildaufnahmevorrichtung aufgenommen. Positionen von Funktionsgravuren des Brillenglases werden im aufgenommenen Bild ermittelt. Weiterhin wird zumindest eine Glaskontur des zumindest einen Brillenglases im aufgenommenen Bild ermittelt und die Zentrierung des Brillenglases überprüft unter Berücksichtigung der ermittelten Position der Funktionsgravuren, der ermittelten Glaskontur und einer vorbekannten, nutzerabhängigen Sollgeometrie der Zentrierung. Das Dokument DE 10 2014 005281 A1 offenbart eine Vorrichtung und ein Verfahren zur berührungslosen Detektion einer Position von zumindest einem mit Markierungen versehenem Brillenglas im dreidimensionalen Raum. Die Vorrichtung umfasst zumindest eine Beleuchtungseinrichtung, welche ausgelegt ist, das zumindest eine Brillenglas zumindest im Bereich der Markierungen zu beleuchten. Zwei oder mehrere Bildaufnahmeeinrichtungen sind ausgelegt, Bilddaten der Markierungen und zumindest von Teilbereichen des zumindest einen Brillenglases zu erzeugen. Eine Bilddatenverarbeitungseinrichtung ist ausgelegt, anhand der erzeugten Bilddaten dreidimensionale Positionen der Markierungen zu ermitteln. Eine Positionsbestimmungseinrichtung ist ausgelegt, anhand von Brillenglasdaten, welche für das zumindest eine Brillenglas bereitgestellt sind, und anhand der ermittelten dreidimensionalen Markierungspositionen die Position des zumindest einen Brillenglases im Raum zu bestimmen.

Der Fassungsscheibenwinkel kann als ein Maß für die Rundung einer Brillenfassung betrachtet werden und spielt bei der Zentrierung von Brillengläsern sowie bei der Berechnung individualisierter ophthalmischer Brillengläser eine Rolle.

Das vorbekannte Verfahren zur Vermessung und Überprüfung des Fassungsscheibenwinkels funktioniert für diffus reflektierende Oberflächen relativ gut. Eine Schwierigkeit bei Brillengläsern liegt an ihrem reduzierten diffusen Reflex, sowie an ihrer Transparenz. Die Herausforderung besteht insbesondere darin, die für die Messung relevanten Reflexsignale zu erkennen und herauszufiltern. Hierbei sind Reflexsignale von Vorder- und Rückseite des Brillenglases voneinander zu unterscheiden. Zudem sollten Rausch- und Messartefakte herausgefiltert werden, welche z.B. durch Teile der Brillenfassung selbst verursacht werden.

Damit sind die vom Laser gemessenen Reflexsignale teilweise sehr breit gestreut, z.B. bedingt durch Stör-Reflexe, Rückflächen-Reflexe, und/oder schwache Reflexe bei Kunststoffgläsern mit Brechungsindex 1,5.

Das Verfahren funktioniert deswegen nur für einen Teil der Brillengläser zufriedenstellend, während es für ca. ein Drittel der Brillengläser keine brauchbaren Ergebnisse liefert. Für diese Brillengläser muss der FSW z.B. von Hand nachgemessen werden.

Der Erfindung liegt deswegen die Aufgabe zugrunde, eine Möglichkeit bereitzustellen, um den Fassungsscheibenwinkel einer Brille zuverlässiger zu ermitteln.

Diese Aufgabe wird durch die Gegenstände der unabhängigen Ansprüche gelöst. Bevorzugte Ausführungsformen sind die Gegenstände der abhängigen Ansprüche.

Ein Aspekt betrifft ein Verfahren zur Messung des Fassungsscheibenwinkels einer Brille, wobei die Brille, welche ein erstes Brillenglas und ein zweites Brillenglas aufweist, auf einer Brillenaufnahme angeordnet wird. Die Brillenglasoberflächen beider Brillengläser der Brille werden mittels eines Scanners zur Erzeugung von ersten Oberflächenpositionsdatenpunkten des ersten Brillenglases und zweiten Oberflächenpositionsdatenpunkten des zweiten Brillenglases gescannt. Die ersten Oberflächenpositionsdatenpunkte des ersten Brillenglases werden auf die zweiten Oberflächenpositionsdatenpunkte des zweiten Brillenglases bezüglich einer Mittelebene zwischen den beiden Brillengläsern derart gespiegelt, dass sich die ersten und zweiten Oberflächenpositionsdatenpunkte beider Brillengläser überlagern. Es wird eine Ausgleichsfunktion, insbesondere ein Ausgleichspolynom, als Oberflächenfunktion durch die überlagerten Oberflächenpositionsdatenpunkte beider Brillengläser ermittelt. Der Fassungsscheibenwinkel wird mittels der Oberflächenfunktion durch die überlagerten Oberflächenpositionsdatenpunkte beider Brillengläser ermittelt.

Neben einem Ausgleichspolynom kann auch eine andere Funktion als Ausgleichsfunktion verwendet werden, z.B. Geraden und/oder Parabeln aus spezielle Ausgleichspolynome, eine Funktion mit zumindest einer e-Funktion, mit zumindest einer Fourier-Reihe, mit zumindest einer Gaußkurve, und/oder eine ähnliche numerische Näherung. Als besonders geeignet haben sich Ausgleichspolynome erwiesen, da diese mathematisch gut zu handhaben sind und üblicherweise eine hinreichende Genauigkeit erreichen.

Das Verfahren wird an einer fertigen Brille und/oder ein Komplettbrille durchgeführt, d.h. an einer Brille, mit in die Brillenfassung der Brille eingesetzten Brillengläsern aus Kunststoff oder Glas. Zur Durchführung des Verfahrens kann z.B. der Rodenstock Centering Analyzer, welcher mit RCA abgekürzt wird, verwendet werden.

Zunächst wird die Brille auf einem Messplatz im Scanfeld des Scanners angeordnet. Dazu wird die Brillenaufnahme verwendet, welche z.B. ein Zentrierstück aufweisen kann, auf welchem die Brille mit einer vorbestimmten Ausrichtung relativ zum Scanner angeordnet wird. Die Brille kann hierbei so auf der Brillenaufnahme angeordnet werden, dass die Brillenglasoberflächen dem Scanner zugewandt ist. Dies bedeutet, dass die den Augen eines Brillenträgers der Brille abgewandte Seite der Brillengläser, auch Vorderseite genannt, dem Scanner zugewandt ist. Diese den Augen eines Brillenträgers abgewandten Seiten der Brillengläser werden als Brillenglasoberflächen bezeichnet.

Als Scanner kann ein Laserscanner verwendet werden, also ein Scanner, der die Brillenglasoberflächen mittels Laserlicht abscannt. Hierzu ist insbesondere ein Linienlaserscanner geeignet, z.B. der Laserscanner ScanCONTROL 2900-100/BL von der Firma Micro-Epsilon. Der Scanner strahlt ein Scanlicht auf die Brillenglasoberflächen, von denen das Scanlicht reflektiert wird. Das so reflektierte Scanlicht wird vom Scanner als Scansignale registriert. Den so registrierten Lichtreflexen des Scanlichts können Positionsdatenpunkte zugeordnet werden, welche z.B. mittels Triangulation bestimmt werden können. Dazu kann der Scanner in einer wohldefinierten und/oder kalibrierten Position relativ zur Brille und/oder Brillenaufnahme angeordnet sein. **In** einigen Ausführungsformen kann der Scanner die Positionsdatenpunkte (z.B. mittels Triangulation) selbstständig erstellen.

Die Positionsdatenpunkte der von den Brillenglasoberflächen reflektierten Reflexsignale werden als die Oberflächenpositionsdatenpunkte gespeichert. Vom ersten Brillenglas reflektierte Scansignale und/oder Scansignale die von einer ersten Brillenhälfte der Brille, welche das erste Brillenglas umfasst, reflektiert werden, werden als erste Oberflächenpositionsdatenpunkte erfasst und weiterverarbeitet. Vom zweiten Brillenglas reflektierte Scansignale und/oder Scansignale die von einer zweiten Brillenhälfte der Brille, welche das zweite Brillenglas umfasst, reflektiert werden, werden als zweite Oberflächenpositionsdatenpunkte erfasst und weiterverarbeitet. Die Unterscheidung der Oberflächenpositionsdatenpunkte in erste und zweite Oberflächenpositionsdatenpunkte kann hierbei allein auf Basis dessen erfolgen, ob der Reflexionsort der Scansignale in der ersten oder zweiten Brillenhälfte, also z.B. in der linken oder rechten Hälfte der auf der Brillenaufnahme angeordneten Brille, angeordnet ist.

Die so erhaltenen Oberflächenpositionsdatenpunkte enthalten zunächst nicht ausschließlich Positionsdatenpunkte, welche tatsächlich auf den Brillenglasoberflächen angeordnet sind. Tatsächlich können die ersten und/oder zweiten Oberflächenpositionsdatenpunkte zunächst noch Störsignale enthalten, beispielsweise Positionsdatenpunkte, welche von Reflexen der Brillenfassung und/oder von Reflexen an der Brillenglasrückfläche erzeugt wurden. Die Brillenglasrückfläche ist hierbei an der Rückseite des Brillenglases angeordnet, welche in Gebrauchsstellung der Brille den Augen eines Brillenglasträgers zugewandt ist.

Mittels des Scanners können die ersten und zweiten Oberflächenpositionsdatenpunkte so erzeugt werden, dass sie hintereinander auf zumindest einer Scanlinie angeordnet sind. Diese Scanlinie kann z.B. über zumindest eine Brillenglasoberfläche verlaufen. Die Scanlinie kann sich (zumindest in Gebrauchsstellung der Brille) etwa horizontal über das Brillenglas und/oder die Brillengläser erstrecken. Mit anderen Worten kann die Scanlinie hierbei z.B. quer über beide Brillengläser verlaufen. Die Scanlinie kann sich in Linienrichtung über einen Großteil sowohl des ersten Brillenglases als auch des zweiten Brillenglases erstrecken. Dies bedeutet, dass die Oberflächenpositionsdatenpunkte in Linienrichtung der Scanlinie zumindest 50% der Brillenglasoberflächen vom ersten und zweiten Brillenglas überdecken. Vor den nasalen und/oder temporalen Rändern beider Brillengläser kann die Scanlinie unterbrochen und/oder abgeschnitten sein, um von der Brillenfassung verursachte Störreflexe zu reduzieren. Dazu können an den nasalen und/oder temporalen Rändern beider Brillengläser angeordnete Oberflächenpositionsdatenpunkte z.B. automatisch verworfen werden.

Die ersten und zweiten Oberflächenpositionsdatenpunkte können als Koordinaten eines Koordinatensystems gespeichert werden. Jedem so erhaltenen Oberflächenpositionsdatenpunkt wird entweder das erste oder das zweite Brillenglas zugeordnet, so dass er entweder als ein erster oder als ein zweiter Oberflächenpositionsdatenpunkt abgespeichert wird. Hierbei kann das erste Brillenglas z.B. als das linke Brillenglas der Brille ausgebildet sein und das zweite Brillenglas als das rechte Brillenglas. Alternativ erfolgt die Zuordnung genau andersherum.

Die können als ein Datensatz weiterverarbeitet werden. Die weitere Auswertung der so erhaltenen ersten und zweiten Oberflächenpositionsdatenpunkte kann computergestützt durchgeführt werden.

Durch das Spiegeln der ersten Oberflächenpositionsdatenpunkte auf die zweiten Oberflächenpositionsdatenpunkte wird die Anzahl der in einer Messhälfte angeordneten Datenpunkte erhöht, z.B. etwa verdoppelt. Hierdurch kann die Genauigkeit der Messung deutlich erhöht werden, wodurch die Zuverlässigkeit des Messverfahrens erhöht wird.

Die Spiegelung erfolgt bezüglich der Mittelebene, welche z.B. fest definiert sein kann und/oder welche die Brillen etwa symmetrisch in zwei Hälften aufteilt. Die Mittelebene kann in Gebrauchsstellung beim Tragen der Brille z.B. als etwa vertikale Ebene angeordnet sein, welche senkrecht durch die Fassungsbrücke der Brillenfassung der Brille verläuft. Die Mittelebene kann vordefiniert sein relativ zur Brillenaufnahme, auf welcher die Brille bei der Messung angeordnet ist.

Sofern die Brille perfekt auf der Brillenaufnahme ausgerichtet ist, werden die ersten Oberflächenpositionsdatenpunkte nahezu deckungsgleich auf die zweiten Oberflächenpositionsdatenpunkte gespiegelt. In jedem Fall erhöht sich die Anzahl der Positionsdatenpunkte durch die Spiegelung, wodurch eine stabilere Oberflächenfunktion durch die überlagerten Oberflächenpositionsdatenpunkte gelegt werden kann.

So kann ein überlagerter Datensatz von Oberflächenpositionsdatenpunkten erhalten werden, in dem sich die ersten und zweiten Oberflächenpositionsdatenpunkte in der zweiten Brillenhälfte überlagern. In der weiteren Verarbeitung der Oberflächenpositionsdatenpunkte können sämtliche der Oberflächenpositionsdatenpunkte weiterhin indiziert bleiben als entweder erste oder zweite Oberflächenpositionsdatenpunkte.

Als Oberflächenfunktion wird die Ausgleichsfunktion durch die überlagerten Oberflächenpositionsdatenpunkte ermittelt. Hierbei wird bevorzugt ein Ausgleichspolynom zweiten Grades verwendet, welches normalerweise gut zur Krümmung der Vorderfläche der Brillengläser passt, welche einer Kugeloberfläche nachempfunden sind und/oder etwa sphärisch ausgebildet sind. Bei der Ermittlung der Ausgleichsfunktion kann berücksichtigt werden, unter welchem Winkel der Laserscanner relativ zur Brille und/oder Brillenaufnahme angeordnet ist. Dabei kann insbesondere berücksichtigt werden, unter welchem Winkel eine optische Achse des Laserscanners auf die Brillenglasoberflächen der in der Brillenaufnahme angeordneten Brille trifft.

Bevorzugt trifft die optische Achse des Laserscanners etwa senkrecht auf die Brillenglasoberflächen der in der Brillenaufnahme angeordneten Brille, z.B. unter einem Winkel von etwa 80° bis etwa 100°.

Die Ausgleichsfunktion kann z.B. durch lineare Regression ermittelt werden. Die Ausgleichsfunktion wird als Oberflächenfunktion des Brillenglases verwendet. Der Fassungsscheibenwinkel kann auf Basis der Oberflächenfunktion der Brillengläser berechnet werden, da die Oberflächenfunktion den Verlauf der Oberfläche des Brillenglases repräsentiert.

Da sich die Oberflächenfunktion während nachfolgend beschriebener Verarbeitungsschritte der Oberflächenpositionsdatenpunkte ändern kann, wird sie nachfolgend auch als "aktuelle" Oberflächenfunktion bezeichnet. Dies bringt zum Ausdruck, dass als die Oberflächenfunktion letztlich nicht zwingend das nur auf Basis der einfach überlagerten Oberflächenpositionsdatenpunkte erstellte Ausgleichsfunktion verwendet werden muss. Vielmehr kann z.B. nach einem Filtern der Oberflächenpositionsdatenpunkte erneut eine veränderte Ausgleichsfunktion berechnet werden kann, und diese veränderte Ausgleichsfunktion als die aktuelle Oberflächenfunktion verwendet werden, z.B. zur Berechnung des Fassungsscheibenwinkels und/oder zur weiteren Datenverarbeitung.

Mit dem Verfahren kann entweder lediglich ein Fassungsscheibenwinkel berechnet werden oder es werden sowohl der rechte als auch der linke Fassungsscheibenwinkel berechnet. Zur Berechnung des Fassungsscheibenwinkels des ersten Brillenglases kann z.B. die Ausgleichsfunktion bezüglich der Mittelebene zurückgespiegelt werden auf die erste Brillenhälfte, von der die ersten Oberflächenpositionsdatenpunkte gemessen wurden.

Alternativ können die (z.B. nach einer Filterung verbliebenen) ersten Oberflächenpositionsdatenpunkte in die erste Brillenhälfte zurückgespiegelt werden, und es wird eine erste Ausgleichsfunktion durch die ersten Oberflächenpositionsdatenpunkte gelegt und bei der Berechnung des ersten Fassungsscheibenwinkels berücksichtigt.

Somit kann bei der Berechnung des Fassungsscheibenwinkels letztendlich entweder eine einzige Ausgleichsfunktion als Oberflächenfunktion (z.B. für beide Brillengläser) verwendet werden, oder es wird eine erste und eine zweite Ausgleichsfunktion als erste und zweite Oberflächenfunktion für die erste und zweite Brillenhälfte ermittelt. Dann kann der erste und zweite Fassungsscheibenwinkel auf Basis der ersten und zweiten Oberflächenfunktion ermittelt werden.

Durch das Verfahren wird die Symmetrie der Brille ausgenutzt, um die Anzahl der Oberflächenpositionsdatenpunkte zu erhöhen, und so die Berechnung stabiler zu machen. Da die meisten gefertigten Brillen, d.h. über 95% der gefertigten Brillen, eine gleiche Basiskurve der Gläser links und rechts aufweisen, werden für das rechte und linke Brillenglas sehr ähnliche Messwerte erwartet. Die Messwerte können sich dabei z.B. lediglich durch das Rauschen unterscheiden, welches von Messfehlern verursacht wurde. Durch die Spiegelung der ersten Oberflächenpositionsdatenpunkte wird der Datensatz angereichert und damit für die weitere Verarbeitung robuster.

In einer Ausführungsform werden in den überlagerten Oberflächenpositionsdatenpunkten die ersten Oberflächenpositionsdatenpunkte gegenüber den zweiten Oberflächenpositionsdatenpunkten derart verkippt, dass die ersten und zweiten Oberflächenpositionsdatenpunkte näher an der ermittelten Oberflächenfunktion angeordnet sind. Da die Brille in der Praxis nicht immer perfekt ausgerichtet auf der Brillenaufnahme angeordnet ist, kann es vorkommen, dass die ersten Oberflächenpositionsdatenpunkte beim Spiegeln nicht deckungsgleich auf die zweiten Oberflächenpositionsdatenpunkte abgebildet werden. Um dies auszugleichen, erfolgt die Verkippung der ersten Oberflächenpositionsdatenpunkte gegenüber den zweiten Oberflächenpositionsdatenpunkten. Ziel der Verkippung kann es hierbei sein, dass sich die ersten und zweiten Oberflächenpositionsdatenpunkte möglichst deckungsgleich überlagern. Hierzu kann eine Verkippung von maximal etwa 2° ausreichend sein, um die Überdeckung der überlagerten Oberflächenpositionsdatenpunkte deutlich zu erhöhen. Die Stärke der Verkippung, also der genaue Kippwinkel, kann vom Überdeckungsgrad der Oberflächenpositionsdatenpunkte abhängen. Je genauer sich die Oberflächenpositionsdatenpunkte nach dem Verkippen überdecken, umso besser ist der bei der Verkippung verwendete Kippwinkel für die weitere Datenverarbeitung geeignet.

In einer Weiterbildung wird die Verkippung der ersten Oberflächenpositionsdatenpunkte gegenüber den zweiten Oberflächenpositionsdatenpunkten dahingehend optimiert, dass die überlagerten ersten und zweiten Oberflächenpositionsdatenpunkte möglichst nah an einer optimierten Ausgleichsfunktion als die Oberflächenfunktion durch die gegeneinander überlagerten und optimiert verkippten Oberflächenpositionsdatenpunkte beider Brillengläser angeordnet sind. Hierfür kann z.B. ein Bestfit-Ansatz gewählt werden, um die Stärke der Verkippung, d.h. den Kippwinkel, zu optimieren. Durch die so optimierte Verkippung der Oberflächenpositionsdatenpunkte kann ein asymmetrisches Aufliegen der Brille auf der Brillenaufnahme nahezu ausgeglichen werden. Die ersten und zweiten Oberflächenpositionsdatenpunkte können nach der Optimierung der Verkippung nahezu kongruent und/oder deckungsgleich übereinander angeordnet sein. Eine Ausnahme bilden dabei die in den Oberflächenpositionsdatenpunkten enthaltenen Messfehler und/oder Rauschsignale. Auf Basis der überlagerten und so optimiert verkippten Oberflächenpositionsdatenpunkte wird die optimierte Ausgleichsfunktion errechnet. Wiederum wird dazu bevorzugt ein Ausgleichspolynom zweiten Grades verwendet. Die optimierte Ausgleichsfunktion wird als die Oberflächenfunktion verwendet, z.B. bei der Berechnung des oder der Fassungsscheibenwinkel(s). Diese optimierte Verkippung verbessert den überlagerten Datensatz, macht ihn zu einem optimierten Datensatz, und kann demzufolge zu einem genaueren und zuverlässigeren Messergebnis führen.

Gemäß einer Ausführungsform werden in einem Reduktionsschritt aus den überlagerten und ggf. (z.B. optimiert) verkippten Oberflächenpositionsdatenpunkten einzelne Oberflächenpositionsdatenpunkte entfernt, deren Abstand von der Oberflächenfunktion größer ist als ein vorbestimmter erster Maximalabstand, um so überlagerte und reduzierte Oberflächenpositionsdatenpunkte zu erhalten. Für den Reduktionsschritt werden entweder die überlagerten Oberflächenpositionsdatenpunkte verwendet, oder es werden die bereits überlagerten und verkippten Oberflächenpositionsdatenpunkte verwendet, oder es werden bevorzugt die überlagerten und optimiert verkippten Oberflächenpositionsdatenpunkte verwendet. Bei Letzteren ist die Verkippung bereits wie voranstehend beschrieben optimiert. Zur Eliminierung von "Ausreißern" im Datensatz werden im Reduktionsschritt diejenigen Oberflächenpositionsdatenpunkte aus dem (z.B. optimierten) Datensatz entfernt, die weiter als der vorbestimmte Maximalabstand von der aktuellen Oberflächenfunktion entfernt sind. Als Oberflächenfunktion kann hierzu eine der Ausgleichsfunktionen verwendet werden. So kann als Oberflächenfunktion z.B. die auf Basis der überlagerten Oberflächenpositionsdatenpunkte erstellte (einfache) Ausgleichsfunktion verwendet werden, oder die optimierte Ausgleichsfunktion, oder aber während einer Iteration eine reduzierte Ausgleichsfunktion (vgl. hierzu die nachfolgend beschriebenen Verarbeitungsschritte). Als erster vorbestimmter Maximalabstand kann z.B. ein Abstand von etwa 0,1 mm bis etwa 0,5 mm verwendet werden, bevorzugt von 0,2 mm bis etwa 0,4 mm. Ein erster Maximalabstand von etwa 0,3 mm hat sich empirisch als besonders geeignet erwiesen, um eine sinnvolle Reduktion und somit Filterung der Oberflächenpositionsdatenpunkte zu bewirken. Somit werden sämtliche Oberflächenpositionsdatenpunkte, welche weiter als z.B. 0,3 mm von der aktuellen Oberflächenfunktion beabstandet sind, aus dem aktuellen Datensatz eliminiert und für die weitere Berechnung nicht berücksichtigt.

In einer Weiterbildung wird eine reduzierte Ausgleichsfunktion, insbesondere ein reduziertes Ausgelichspolynom, als Oberflächenfunktion durch die überlagerten und reduzierten Oberflächenpositionsdatenpunkte beider Brillengläser ermittelt. Nach der Bereinigung des Datensatzes, also nach dem Entfernen der zu weit entfernt angeordneten Oberflächenpositionsdatenpunkte während des Reduktionsschritts, wird somit erneut eine Ausgleichsfunktion durch die verbliebenen Oberflächenpositionsdatenpunkte gelegt. Diese Ausgleichsfunktion kann als ein Polynom zweiten Grades ausgebildet sein und als reduziertes Ausgleichspolynom bezeichnet werden, da es ein einem reduzierten Datensatz an Oberflächenpositionsdatenpunkten basiert.

Die reduzierte Ausgleichsfunktion wird nachfolgend als die aktuelle Oberflächenfunktion verwendet. Beispielsweise kann der Fassungsscheibenwinkel auf Basis der so erhaltenen Oberflächenfunktion ermittelt werden.

In einer Weiterbildung wird zumindest der Reduktionsschritt auf Basis der reduzierten Ausgleichsfunktion als die Oberflächenfunktion und auf Basis der überlagerten und reduzierten Oberflächenpositionsdatenpunkte iteriert. Während der Iteration werden wiederum einzelne Oberflächenpositionsdatenpunkte entfernt, deren Abstand von der nun aktuellen Oberflächenfunktion, also von der reduzierten Ausgleichsfunktion, größer ist als der vorbestimmte erste Maximalabstand. Hierbei wird der reduzierte Datensatz an Oberflächenpositionsdatenpunkten noch weiter reduziert, wobei die Qualität der verbliebenen Oberflächenpositionsdatenpunkte erhöht wird. Auf Basis der so weiter reduzierten Oberflächenpositionsdatenpunkte wird erneut eine reduzierte Ausgleichsfunktion durch die verbliebenen, reduzierten Oberflächenpositionsdatenpunkte ermittelt. Der Reduktionsschritt kann so lange auf Basis der jeweils neu berechneten reduzierten Ausgleichsfunktion iteriert werden, bis kein einziger Oberflächenpositionsdatenpunkt mehr weiter als der erste Maximalabstand von der (aktuellen) reduzierten Ausgleichsfunktion durch die verbliebenen überlagerten und reduzierten Oberflächenpositionsdatenpunkte beabstandet ist. Daraufhin kann die Iteration beendet werden. Durch die Iteration wird eine effektive Filterung der Oberflächenpositionsdatenpunkte erreicht.

Die Iteration kann darüber hinaus weitere Verfahrensschritte umfassen. So kann zusätzlich zum Reduktionsschritt auch die Optimierung der Verkippung der Oberflächenpositionsdatenpunkte gegeneinander iteriert werden. Beispielsweise kann zunächst die Optimierung der Verkippung iteriert werden, dann kann erneut eine optimiertes Ausgleichsfunktion ermittelt werden, und anschließend wird der Reduktionsschritt iteriert.

Dabei kann zumindest der Reduktionsschritt auf Basis der jeweils aktuellen Oberflächenfunktion, also z.B. der erneut ermittelten reduzierten Ausgleichsfunktion oder der erneut ermittelten optimierten Ausgleichsfunktion, so lange iteriert werden, bis eine vorbestimmt genaue Filterung der Oberflächenpositionsdatenpunkte erreicht wird. Die Iteration kann z.B. gemäß dem Newton-Verfahren erfolgen. Die Iterationen können z.B. dann beendet werden, wenn während des Reduktionsschritts keine Oberflächenpositionsdatenpunkte mehr ermittelt werden, welche weiter als der erste Maximalabstand von der aktuellen Oberflächenfunktion entfernt sind, also z.B. von der reduzierten oder optimierten Ausgleichsfunktion.

In einer Weiterbildung der Ausführungsform mit dem Reduktionsschritt werden aus den überlagerten und reduzierten Oberflächenpositionsdatenpunkten einzelne Oberflächenpositionsdatenpunkte entfernt, deren Abstand von der Oberflächenfunktion größer ist als ein vorbestimmter zweiter Maximalabstand, wobei der zweite Maximalabstand kleiner als der erste Maximalabstand ausgebildet ist, um so minimierte Oberflächenpositionsdatenpunkte zu erhalten. Dieser Verfahrensschritt kann als Minimierungsschritt bezeichnet werden. Der zweite Maximalabstand kann z.B. etwa halb so groß wie der erste Maximalabstand ausgebildet sein. Im Beispiel kann der zweite Maximalabstand damit etwa 0,15 mm betragen. Durch diese Minimierung der reduzierten und überlagerten Oberflächenpositionsdatenpunkte wird eine weitere Filterung des Datensatzes erreicht, wodurch ein minimierter Datensatz erhalten wird, welcher nur noch die minimierten (und immer noch überlagerten) Oberflächenpositionsdatenpunkte umfasst.

In einer Weiterbildung wird eine minimierte Ausgleichsfunktion, insbesondere ein minimiertes Ausgleichspolynom, als die Oberflächenfunktion durch die minimierten Oberflächenpositionsdatenpunkte beider Brillengläser ermittelt. Die minimierte Ausgleichsfunktion kann als die letztlich zur Berechnung des Fassungsscheibenwinkels verwendete Oberflächenfunktion verwendet werden. Alternativ kann der voranstehend beschriebene Reduktionsschritt und/oder Minimierungsschritt zusätzlich noch auf Basis der minimierten Ausgleichsfunktion und auf Basis der minimierten Oberflächenpositionsdatenpunkte iteriert werden. In der Praxis hat sich gezeigt, dass durch eine weitere Iteration auf Basis des kleineren zweiten Maximalabstands kaum noch zu Verbesserungen des minimierten Datensatzes führt. Deswegen ist es normalerweise hinreichend, die Minimierung nur einmal durchzuführen und die einmal berechnete minimierte Ausgleichsfunktion als die endgültige Oberflächenfunktion zu verwenden.

Gemäß einer Ausführungsform wird der Fassungsscheibenwinkel auf Basis der Oberflächenfunktion ermittelt, welche einer der folgenden Ausgleichsfunktionen entspricht:
a) der optimierten Ausgleichsfunktion,
b) der reduzierten Ausgleichsfunktion, oder
c) der minimierten Ausgleichsfunktion.

Das Messergebnis wird umso genauer und erzielt, je mehr der vorangehend beschriebenen Verfahrensschritte durchgeführt werden. Idealerweise werden somit die überlagerten Oberflächenpositionsdatenpunkte gegeneinander verkippt, diese Verkippung optimiert wird, eine iterative Reduktion auf Basis des ersten Maximalwerts durchgeführt, und eine Minimierung auf Basis des zweiten Maximalwerts durchgeführt, und als Oberflächenfunktion die minimierte Ausgleichsfunktion verwendet. Durch dieses Vorgehen konnte in der Praxis der Fassungsscheibenwinkel von zumindest 97% der vermessenen Brillen korrekt bestimmt werden. Lediglich bei weniger als 3% der vermessenen Brillen konnte so kein zufriedenstellendes Messergebnis erzielt werden. Damit ist die Zuverlässigkeit gegenüber dem vorbekannten Verfahren deutlich erhöht, wonach für etwa jede dritte Brille der Fassungsscheibenwinkel nicht hinreichend genau bestimmt werden konnte.

Gemäß einer Ausführungsform wird als Ausgleichsfunktion ein Ausgleichspolynom ermittelt. Je nach Ausführungsform wird gegebenenfalls ermittelt und/oder verwendet:
a) als optimierte Ausgleichsfunktion ein optimiertes Ausgleichspolynom, und/oder
b) als reduzierte Ausgleichsfunktion ein reduzierte Ausgleichspolynom, und/oder
c) als minimierte Ausgleichsfunktion ein minimiertes Ausgleichspolynom.

Ausgleichspolynome lassen sich mathematisch am einfachsten handhaben und eigenen sich deswegen besonders, um technisch sonnvolle Näherungskurven an Messpunkte zu legen. Es hat sich gezeigt, dass gerade Ausgleichspolynome als Näherung für das der Erfindung zugrunde liegende Problem geeignet sind.

Gemäß einer Ausführungsform werden vor dem Ermitteln des Fassungsscheibenwinkels für das erste Brillenglas die verbliebenden ersten Oberflächenpositionsdatenpunkte auf die zugehörige Brillenseite zurückgespiegelt. Hierbei handelt es sich um die verbliebenen ersten Oberflächenpositionsdatenpunkte des aktuellen Datensatzes, also z.B. dem optimierten, reduzierten oder minimierten Datensatz. Durch diese zurückgespiegelten ersten Oberflächenpositionsdatenpunkte kann eine erste Ausgleichsfunktion ermittelt werden, z.B. eine erste minimierte Ausgleichsfunktion durch die zurückgespiegelten ersten minimierten Oberflächenpositionsdatenpunkte. Die erste Ausgleichsfunktion kann als erste Oberflächenfunktion zur Berechnung des ersten Fassungsscheibenwinkels des ersten Brillenglases verwendet werden. Die nach dem Zurückspiegeln in der zweiten Brillenhälfte verbliebenen zweiten Oberflächenpositionsdatenpunkte, also z.B. die minierten zweiten Oberflächenpositionsdatenpunkte, können zum Ermitteln eine zweite Ausgleichsfunktion verwendet werden, also z.B. eine zweite minimierte Ausgleichsfunktion. Diese zweite Ausgleichsfunktion kann als zweite Oberflächenfunktion zur Berechnung des zweiten Fassungsscheibenwinkels des zweiten Brillenglases verwendet werden.

Alternativ kann lediglich die aktuelle Ausgleichsfunktion zurückgespiegelt werden, also z.B. die optimierte Ausgleichsfunktion, die reduzierte Ausgleichsfunktion, oder die minimierte Ausgleichsfunktion. So kann die aktuelle Ausgleichsfunktion in beiden Brillenhälften als erste und zweite Oberflächenfunktion zur Berechnung des ersten und zweiten Fassungsscheibenwinkels verwendet werden. Das Zurückspiegeln der verbliebenen ersten Oberflächenpositionsdatenpunkte in die erste Brillenhälfte liefert in der Regel jedoch zuverlässigere Ergebnisse bei der Berechnung der Fassungsscheibenwinkel.

Gemäß einer Ausführungsform werden die Oberflächenpositionsdatenpunkte im Zweidimensionalen ermittelt. Auch die weitere Auswertung, Filterung und Berechnung kann im Zweidimensionalen erfolgen. Dies ist hinreichend für eine zuverlässige Messung des Fassungsscheibenwinkels und reduziert gegenüber einer Berechnung Dreidimensionalen den Arbeitsaufwand.

Ein Aspekt betrifft eine Vorrichtung zur Messung des Fassungsscheibenwinkels einer Brille mit einer Brillenaufnahme zum Aufnehmen der Brille, welche ein erstes Brillenglas und ein zweites Brillenglas aufweist. Ein Scanner ist zum Scannen der Brillenglasoberflächen beider Brillengläser der auf der Brillenaufnahme angeordneten Brille konfiguriert sowie zur Erzeugung von ersten Oberflächenpositionsdatenpunkten des ersten Brillenglases und zweiten Oberflächenpositionsdatenpunkten des zweiten Brillenglases. Ein Spiegelmodul ist dazu konfiguriert, die ersten Oberflächenpositionsdatenpunkte des ersten Brillenglases auf die zweiten Oberflächenpositionsdatenpunkte des zweiten Brillenglases zu spiegeln bezüglich einer Mittelebene zwischen den beiden Brillengläsern derart, dass sich die ersten und zweiten Oberflächenpositionsdatenpunkte beider Brillengläser überlagern. Ein Ausgleichsfunktionsermittlungsmodul ist dazu konfiguriert, eine Ausgleichsfunktion als Oberflächenfunktion durch die überlagerten Oberflächenpositionsdatenpunkte beider Brillengläser zu ermitteln. Ein Fassungsscheibenwinkelermittlungsmodul ist dazu konfiguriert, den Fassungsscheibenwinkel mittels der Oberflächenfunktion durch die überlagerten Oberflächenpositionsdatenpunkte beider Brillengläser zu ermitteln.

Die Vorrichtung kann dazu ausgebildet sein, das Verfahren nach dem voranstehend beschriebenen Aspekt durchzuführen. Deswegen betreffen die Ausführungen zur Vorrichtung auch das Verfahren und umgekehrt. Als Vorrichtung kann z.B. ein RCA verwendet werden, also der Rodenstock Centering Analyzer. Der RCA kann einen Computer aufweisen und/oder mit einem Computer verbunden sein, auf welchem die Auswertung der Oberflächenpositionsdatenpunkte durchgeführt werden kann.

Das Ausgleichsfunktionsermittlungsmodul kann dazu verwendet werden, die Ausgleichsfunktion durch die überlagerten Oberflächenpositionsdatenpunkte zu ermitteln, die optimierte Ausgleichsfunktion durch die überlagerten und optimiert verkippten Oberflächenpositionsdatenpunkte zu ermitteln, die reduzierte Ausgleichsfunktion durch die überlagerten und reduzierten Oberflächenpositionsdatenpunkte zu ermitteln, und/oder die minimierte Ausgleichsfunktion durch die minimierten Oberflächenpositionsdatenpunkte zu ermitteln.

In einer Ausführungsform weist die Vorrichtung zumindest eines der folgenden Module auf:
- ein Verkippungsmodul, welches dazu konfiguriert ist, in den überlagerten Oberflächenpositionsdatenpunkten die ersten Oberflächenpositionsdatenpunkte gegenüber den zweiten Oberflächenpositionsdatenpunkten derart zu verkippen, dass die ersten und zweiten Oberflächenpositionsdatenpunkte näher an der ermittelten Oberflächenfunktion angeordnet sind; und/oder
- ein Optimierungsmodul, welches dazu konfiguriert ist, die Verkippung der ersten Oberflächenpositionsdatenpunkte gegenüber den zweiten Oberflächenpositionsdatenpunkte dahingehend zu optimieren, dass die überlagerten ersten und zweiten Oberflächenpositionsdatenpunkte möglichst nah an einer optimierten Ausgleichsfunktion als die Oberflächenfunktion durch die gegeneinander überlagerten und optimiert verkippten Oberflächenpositionsdatenpunkte beider Brillengläser angeordnet sind; und/oder
- ein Reduktionsmodul, welches dazu konfiguriert ist, in einem Reduktionsschritt aus dem überlagerten Oberflächenpositionsdatenpunkten einzelne Oberflächenpositionsdatenpunkte zu entfernen, deren Abstand von der Oberflächenfunktion größer ist als ein vorbestimmter erster und/oder zweiter Maximalabstand; und/oder
- ein Iterationsmodul, welches dazu konfiguriert ist, zumindest den Reduktionsschritt auf Basis einer reduzierten Ausgleichsfunktion durch vom Reduktionsmodul überlagerte und reduzierte Oberflächenpositionsdatenpunkte als die Oberflächenfunktion und auf Basis der überlagerten und reduzierten Oberflächenpositionsdatenpunkte zu iterieren.

Die Module sind dazu konfiguriert, die einzelnen im Zusammenhang mit dem Verfahren beschriebenen Verfahrensschritte durchzuführen. Die Module können als Software-Module ausgebildet sein.

Ein Aspekt betrifft ein Computerprogrammprodukt umfassend computerlesbare Programmteile, welche geladen und ausgeführt eine Vorrichtung nach dem voranstehend beschriebenen Aspekt dazu zu bringen, ein Verfahren nach dem eingangs beschriebenen Aspekt durchzuführen, wobei das Computerprogrammprodukt die folgenden Einheiten zumindest teilweise steuert und/oder regelt:
- den Scanner; undr
- das Spiegelmodul; undr
- das Ausgleichsfunktionsermittlungsmodul; und
- das Fassungsscheibenwinkelermittlungsmodul;
   wobei das Computerprogrammprodukt weiterhin insbesondere noch zumindest eine der folgenden Einheiten zumindest teilweise steuert und/oder regelt
- das Verkippungsmodul; und/oder
- das Optimierungsmodul; und/oder
- das Reduktionsmodul; und/oder
- das Iterationsmodul.

Das Computerprogrammprodukt kann als eine Steuersoftware ausgebildet sein. Das Computerprogrammprodukt kann zumindest zur Steuerung der für die Auswertung verwendeten Softwaremodule ausgebildet sein. Zusätzlich kann es dazu ausgebildet sein, ein Startsignal an den Scanner zu senden sowie Messdaten vom Scanner zu erhalten, aus denen das Computerprogrammprodukt die ersten und zweiten Oberflächenpositionsdatenpunkte erhält und/oder errechnen kann.

Im Rahmen dieser Erfindung können die Begriffe "im Wesentlichen" und/oder "etwa" so verwendet sein, dass sie eine Abweichung von bis zu 5% von einem auf den Begriff folgenden Zahlenwert beinhalten, eine Abweichung von bis zu 5° von einer auf den Begriff folgenden Richtung und/oder von einem auf den Begriff folgenden Winkel.

Begriffe wie oben, unten, oberhalb, unterhalb, lateral, usw. beziehen sich - sofern nicht anders spezifiziert - auf das Bezugssystem der Erde in einer Betriebsposition des Gegenstands der Erfindung.

Die Erfindung wird nachfolgend anhand von in Figuren gezeigten

Ausführungsbeispielen näher beschrieben. Hierbei können gleiche oder ähnliche Bezugszeichen gleiche oder ähnliche Merkmale der Ausführungsformen kennzeichnen. Einzelne in den Figuren gezeigte Merkmale können in anderen Ausführungsbeispielen implementiert sein. Es zeigen:
- Fig. 1: in einem Diagramm gescannte erste und zweite Oberflächenpositionsdatenpunkte einer Brille;
- Fig. 2: in einem Diagramm überlagerte Oberflächenpositionsdatenpunkte, durch die eine Ausgleichsfunktion gelegt ist;
- Fig. 3: in einem Diagramm überlagerte und optimiert verkippte Oberflächenpositionsdatenpunkte, durch die eine optimierte Ausgleichsfunktion gelegt ist;
- Fig. 4: in einem Diagramm überlagerte und reduzierte Oberflächenpositionsdatenpunkte, durch die eine reduzierte Ausgleichsfunktion gelegt ist;
- Fig. 5: in einem Diagramm erste und zweite minimierte Oberflächenpositionsdatenpunkte, wobei die ersten minimierte Oberflächenpositionsdatenpunkte auf ihre Ursprungsseite zurückgespiegelt sind, wobei durch die ersten minimierten Oberflächenpositionsdatenpunkte eine erste minimierte Ausgleichsfunktion als erste Oberflächenfunktion gelegt ist und durch die zweiten minimierten Oberflächenpositionsdatenpunkte ein zweite minimierte Ausgleichsfunktion als zweite Oberflächenfunktion; und
- Fig. 6: in einem Flussdiagram ein Ausführungsbeispiel eines Verfahrens zum Ermitteln eines Fassungsscheibenwinkels.

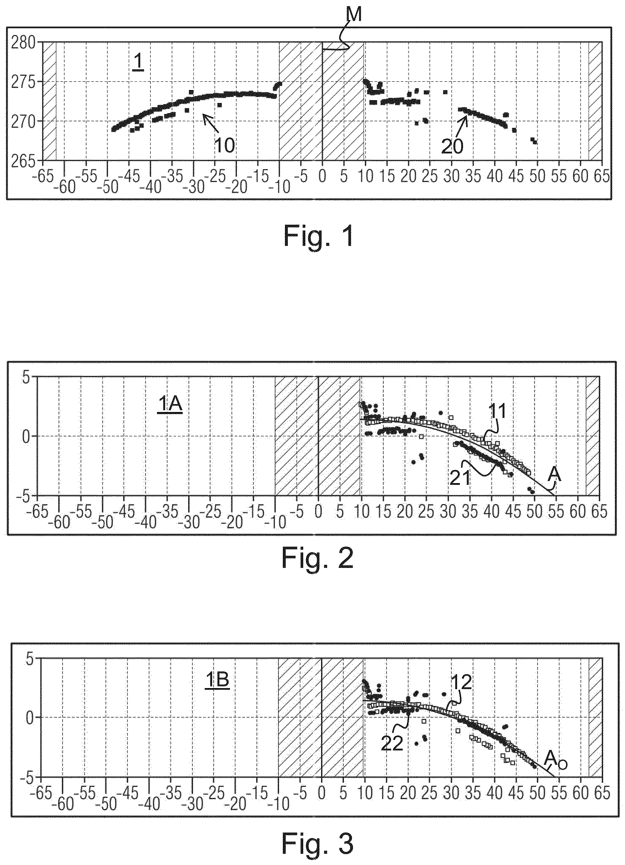

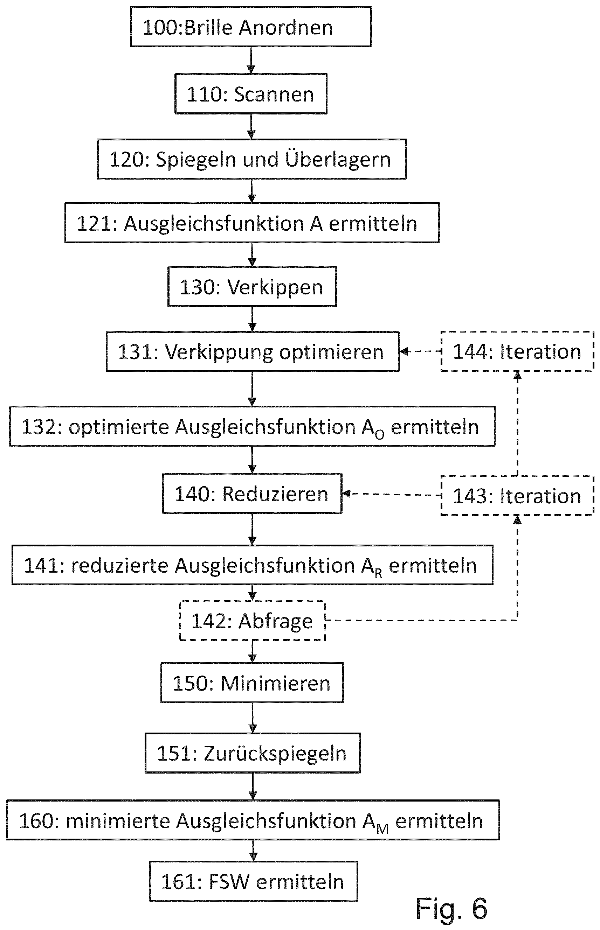

In den Figuren ist ein Ausführungsbeispiel eines Verfahrens zur Messung des Fassungsscheibenwinkels einer Brille gezeigt und visualisiert. Dabei zeigt **Fig. 6** in einem Flussdiagramm einzelne Schritte des Verfahrens. Die **Figuren 1 bis 5** zeigen jeweils in ein Diagramm eingetragene Oberflächenpositionsdatenpunkte eines Datensatzes, welche während der Durchführung des Verfahrens ermittelt und/oder verwendet werden.

Das erfindungsgemäße Verfahren muss nicht unbedingt sämtliche in Fig. 6 gezeigte Verfahrensschritte aufweisen, da einige der in Fig. 6 gezeigten Verfahrensschritte optional sind. Weiterhin kann das Verfahren zusätzliche Verfahrensschritte aufweisen, welche nicht in Fig. 6 gezeigt sind.

In dem in **Fig. 6** gezeigten Verfahrensschritt 100 wird die zu vermessende Brille mit einem ersten und zweiten Brillenglas im Messfeld eines Scanners angeordnet. Dazu kann die Brille so angeordnet auf eine Brillenaufnahme aufgebracht werden, dass die Vorderflächen beider Brillengläser der Brille dem Scanner zugewandt sind.

Anschließend wird in Verfahrensschritt 110 die Brille gescannt, wobei insbesondere die beiden Vorderflächen, auch Brillenglasoberflächen genannt, des ersten Brillenglases und des zweiten Brillenglases der Brille vom Scanner gescannt werden. Die Brillenaufnahme kann dabei so relativ zum Scanner angeordnet sein, dass die Strahlen des Scanlichts des Scanners etwa senkrecht auf die beiden Vorderflächen der Brille auftreffen. Die Brillenaufnahme und/oder der Scanner können so kalibriert sein, dass vom Scanner z.B. mittels Triangulation Oberflächenpositionsdatenpunkte der Brillenglasoberfläche generiert werden können. Die Oberflächenpositionsdatenpunkte können z.B. als 2D-Koordinaten generiert werden.

Dabei kann der Scanner als ein Laserscanner ausgebildet sein, z.B. als ein Linienlaserscanner. Der Scanner erzeugt zumindest einen Datensatz 1, welcher die Oberflächenpositionsdatenpunkte aufweist. Diese Oberflächenpositionsdatenpunkte enthalten Koordinaten, an denen beim Scannen in Verfahrensschritt 110 Reflexe des Scanlichts aufgetreten sind. Von diesen Reflexen registriert der Scanner in Verfahrensschritt 110 Reflexsignale, die wiederum in die Oberflächenpositionsdatenpunkte umgewandelt werden.

**Fig. 1** zeigt in einem Diagramm den vom Scanner aufgenommenen Datensatz 1 mit ersten Oberflächenpositionsdatenpunkten 10 und zweiten Oberflächenpositionsdatenpunkten 20. Die ersten und zweiten Oberflächenpositionsdatenpunkte 10 und 20 des Datensatzes 1 sind in ein in Fig. 1 gezeigtes Diagramm aufgetragen. Durch den Nullpunkt entlang der x-Achse des Diagramms verläuft eine Mittelebene M, bezüglich welcher die Brille im Wesentlichen symmetrisch ausgebildet ist. Im negativen Bereich der x-Achse ist beim Scannen das erste Brillenglas angeordnet. Deswegen wird dieser negative x-Bereich auch als erste Brillenhälfte bezeichnet. Im positiven Bereich der x-Achse ist beim Scannen das zweite Brillenglas angeordnet. Deswegen wird dieser positive x-Bereich auch als zweite Brillenhälfte bezeichnet.

Beim Scannen 110 erzeugt der Scanner keine Oberflächenpositionsdatenpunkte, welche näher als z.B. etwa 10 mm an der Mittelebene M angeordnet sind. Genauso erzeugt er keine Oberflächenpositionsdatenpunkte in einem Bereich, der weiter als z.B. etwa 50 mm von der Mittelebene M entfernt ist. Der Scanner erzeugt somit nur Oberflächenpositionsdatenpunkte, welche zumindest um einen Nasalabstand (im Beispiel etwa 10 mm) von der Mittelebene M beabstandet sind und/oder welche maximal einen Temporalabstand (im Beispiel etwa 50 mm) von der Mittelebene M beabstandet sind.

An der X-Achse der in den Figuren 1 bis 5 gezeigten Diagramme ist die entsprechende Entfernung von der Mittelebene M in Millimetern angegeben.

Auf der Y-Achse der in den Figuren 1 bis 5 gezeigten Diagramme ist das Höhenprofil der Brillengläser in z.B. Millimetern angegeben. Dabei sind in einigen der in den Figuren 1 bis 5 gezeigten Diagrammen leicht verschobene und/oder unterschiedliche skalierte y-Achsen gezeigt.

In den in Fig. 1 beispielhaft gezeigten Messdaten des Datensatzes 1 ist insbesondere bei den ersten Oberflächenpositionsdatenpunkten 10 neben Reflexsignalen entlang der Brillenglasoberfläche des ersten Brillenglases eine Mehrzahl von störenden Reflexsignalen gezeigt, welche wahrscheinlich von der Brillenglasrückfläche des ersten Brillenglases verursacht sind. Bei den in Fig. 1 gezeigten zweiten Oberflächenpositionsdatenpunkten ist eine Mehrzahl von Reflexsignalen gezeigt, die wohl von einem Rauschen und/oder einer Störung verursacht sind, und welche wohl nicht tatsächlich von der Brillenglasoberfläche des zweiten Brillenglases reflektiert worden sind. Ein Großteil der im Datensatz 1 enthaltenen Oberflächenpositionsdatenpunkte 10 und 20 sind wohl allerdings tatsächlich von den beiden Brillenglasoberflächen der Brille verursacht und ermöglichen daher einen Rückschluss auf den Fassungsscheibenwinkel.

In einem Verfahrensschritt 120 werden nun die ersten Oberflächenpositionsdatenpunkte 10 bezüglich der Mittelebene M aus der ersten Brillenhälfte (also aus dem negativen x-Bereich) in die zweite Brillenhälfte (also in den positiven x-Bereich) gespiegelt. Dies kann z.B. einfach durch Änderung des Vorzeichens der x-Koordinate jedes ersten Oberflächenpositionsdatenpunktes 10 erfolgen. Bei der Spiegelung werden somit sämtliche Oberflächenpositionsdatenpunkte in die zweite Brillenhälfte, also im Beispiel in den positiven x-Bereich gespiegelt.

**Fig. 2** zeigt in einem Diagramm einen dabei erhaltenen überlagerten Datensatz 1A, welcher sowohl überlagerte erste Oberflächenpositionsdatenpunkte 11 als auch überlagerte zweite Oberflächenpositionsdatenpunkte 21 umfasst. Hierbei sind die überlagerten zweiten Oberflächenpositionsdatenpunkte 21 durch gefüllte Kästchen gekennzeichnet. Sie können im Wesentlichen den in Fig. 1 gezeigten zweiten Oberflächenpositionsdatenpunkten 20 entsprechen. Die überlagerten ersten Oberflächenpositionsdatenpunkte 11 sind in Fig. 2 durch leere Kästchen gekennzeichnet. Sie können im Wesentlichen den in Fig. 1 gezeigten ersten Oberflächenpositionsdatenpunkten 10 mit geändertem Vorzeichen der x-Koordinate entsprechen.

In einem daran anschließenden Verfahrensschritt 130 werden die überlagerten ersten Oberflächenpositionsdatenpunkte 11 gegenüber den überlagerten zweiten Oberflächenpositionsdatenpunkten 21 verkippt. Durch die Verkippung kann ein Fehler ausgeglichen werden, welcher sich aufgrund einer asymmetrisch auf die Brillenaufnahme aufgelegte Brille ergeben kann. Hierbei kann ein Kippwinkel, um welchen die Verkippung erfolgt, eine einstellige Anzahl Grad betragen oder sogar nur einen Bruchteil eines Grads. Ein solch kleiner Kippwinkel kann ausreichend sein, um die Oberflächenpositionsdatenpunkte 11 und 21 des überlagerten Datensatzes 1A im Wesentlichen kongruent und/oder weitestgehend deckungsgleich zu überlagern.

In einem anschließenden Verfahrensschritt 131 wird die Verkippung dahingehend optimiert, z.B. mittels eines Best-Fit-Ansatzes, dass sich die überlagerten ersten und zweiten Oberflächenpositionsdatenpunkte 11 und 21 möglichst deckungsgleich und/oder kongruent überlagern.

**Fig. 3** zeigt in einem Diagramm einen optimierten Datensatz 1B, welcher sich aus der Optimierung der Verkippung in Verfahrensschritt 131 ergibt. Der optimierte Datensatz 1B umfasst dabei optimiert verkippte erste Oberflächenpositionsdatenpunkte 12 (in Fig. 3 durch leere Kästchen gekennzeichnet) und optimiert verkippte zweite Oberflächenpositionsdatenpunkte 22 (in Fig. 3 durch gefüllte Kästchen gekennzeichnet), welche wiederum jeweils auf den ursprünglich generierten ersten und zweiten Oberflächenpositionsdatenpunkten 10 und 20 basieren.

In einem Verfahrensschritt 132 wird durch sämtliche dieser überlagerten und optimiert verkippten ersten und zweiten Oberflächenpositionsdatenpunkte 12 und 22 eine optimierte Ausgleichsfunktion Ao gelegt. Im Ausführungsbeispiel kann dazu ein optimiertes Ausgleichspolynom verwendet werden, weswegen die optimierte Ausgleichsfunktion Ao nachfolgend auch als optimiertes Ausgleichspolynom Ao bezeichnet wird.

Das Verfahren kann im Weiteren auf Basis des so ermittelten optimierten Ausgleichspolynoms Ao und des optimierten Datensatzes 1B weitergeführt werden.

In einem anschließenden Verfahrensschritt 140 erfolgt als ein Reduktionsschritt ein Reduzieren der Oberflächenpositionsdatenpunkte 12 und 22 des optimierten Datensatzes 1B. Dabei werden sogenannte "Ausreißer" aus dem optimierten Datensatz 1B eliminiert und/oder herausgefiltert. Hierbei können insbesondere solche Oberflächenpositionsdatenpunkte 12 und 22 aus dem optimierten Datensatz 1B entfernt werden, welche weiter als ein vorbestimmter ersten Maximalabstand von dem optimierten Ausgleichspolynom Ao entfernt angeordnet sind. Als erster Maximalabstand kann z.B. ein Abstand von etwa 0,3 mm verwendet werden.

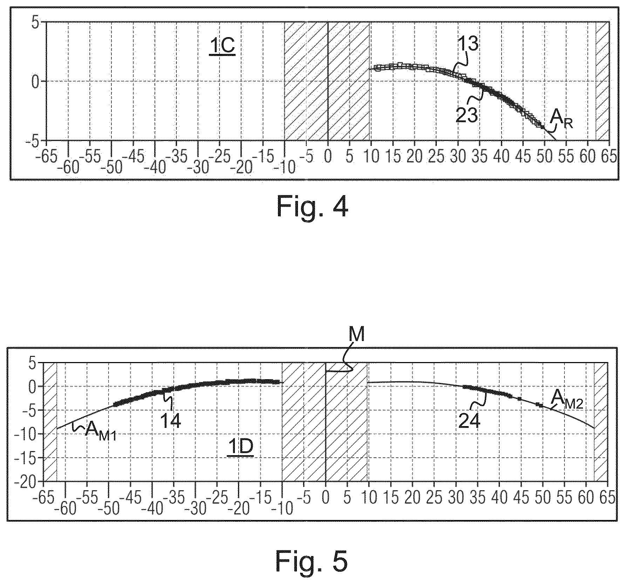

**Fig. 4** zeigt in einem Diagramm einen reduzierten Datensatz 1C, welcher überlagerte und reduzierte erste Oberflächenpositionsdatenpunkte 13 (in Fig. 4 durch leere Kästchen gekennzeichnet) und überlagerte und reduzierte zweite Oberflächenpositionsdatenpunkte 23 (in Fig. 4 durch gefüllte Kästchen gekennzeichnet) aufweist. Der reduzierte Datensatz 1C ist um diejenigen "Ausreißer" bereinigt, welche im optimierten Datensatz 1B noch weiter als der erste Maximalabstand vom Ausgleichspolynom Ao beabstandet angeordnet waren. Durch die Oberflächenpositionsdatenpunkte 13 und 23 des so reduzierten Datensatzes 1C wird in einem Verfahrensschritt 141 eine reduzierte Ausgleichsfunktion A_{R}. Im Ausführungsbeispiel kann dazu ein reduziertes Ausgleichspolynom verwendet werden, weswegen die reduzierte Ausgleichsfunktion A_{R} nachfolgend auch als reduziertes Ao bezeichnet wird.

Anschließend an das Ermitteln des reduzierten Ausgleichspolynoms A_{R} kann das Verfahren z.B. mit einem Minimieren in Verfahrensschritt 150 weitergeführt werden. Dies kann insbesondere dann erfolgen, wenn eine Abfrage 142 ergibt, dass im Reduktionsschritt 140 kein einziger Oberflächenpositionsdatenpunkt mehr aus dem optimierten Datensatz 1B herausgefiltert werden musste, um den reduzierten Datensatz 1C zu erhalten.

Alternativ dazu kann, insbesondere wenn die Abfrage 142 ergibt, dass im Reduktionsschritt 140 noch mindestens ein Oberflächenpositionsdatenpunkt herausgefiltert wurde, anschließend eine Iteration 143 oder 144 erfolgen.

Je nach Ausführungsform kann entweder im Verfahrensschritt 143 eine Iteration der Verfahrensschritte 140, 141 und z.B. 142) erfolgen, oder im Verfahrensschritt 144 eine Iteration der Verfahrensschritte 131, 132, 140, 141 und z.B. 142.

Die Iteration 143 und 144 umfasst zumindest den Reduktionsschritt 140, wobei hierbei nun diejenigen Oberflächenpositionsdatenpunkte herausgefiltert und entfernt werden, welche weiter als der erste Maximalabstand vom reduzierten Ausgleichspolynom A_{R} entfernt angeordnet sind. Ebenfalls iteriert wird auf Basis des so erneut reduzierten Datensatzes 1C das erneute Generieren des reduzierten Ausgleichspolynom A_{R} in Verfahrensschritt 141. Der Reduktionsschritt 140 kann so lange iteriert werden, bis keine weiteren Oberflächenpositionsdatenpunkte mehr eliminiert werden müssen, was z.B. im Rahmen der Abfrage 142 überprüft werden kann.

Alternativ zum Iterationsschritt 143 kann in einem Iterationsschritt 144 nicht nur eine Iteration des Reduktionsschritts 140 erfolgen, sondern die Iteration kann bereits zuvor bei der Optimierung der Verkippung in Verfahrensschritt 131 beginnen. Hierbei werden nur noch die Oberflächenpositionsdatenpunkte des reduzierten Datensatzes 1C betrachtet, aus denen bereits Ausreißer herausgefiltert sind.

Anschließend können sämtliche daran anschließende Verfahrensschritte durchgeführt werden, also der Verfahrensschritt 132, in welchem erneut ein optimiertes Ausgleichspolynom Ao (allgemein: eine optimierte Ausgleichsfunktion) ermittelt wird, und die Verfahrensschritte, 140 bis 142. Die Iteration 144 unter Einbeziehung der Optimierung der Verkippung (Verfahrensschritt 131) in die Iteration verbessert das erzielte Ergebnis noch weiter und führt somit noch zuverlässiger zur Berechnung des tatsächlichen Fassungsscheibenwinkels.

Anschließend an die Abfrage 142 kann im Verfahrensschritt 150 ein Minimieren erfolgen. Hierbei werden noch einmal, ähnlich wie schon wie im Reduktionsschritt 140, "Ausreißer" entfernt. Hierbei wird allerdings an Stelle des ersten Maximalabstands ein kleinerer zweiter Maximalabstand berücksichtigt. Beim Minimieren werden alle Oberflächenpositionsdatenpunkte aus dem reduzierten Datensatz 1C entfernt, welche weiter als der zweiter Maximalabstand, welcher z.B. etwa halb so groß wie der erste Maximalabstand ausgebildet sein kann, vom reduzierten Ausgleichspolynom A_{R} entfernt angeordnet sind. Das Ergebnis liefert einen minimierten Datensatz, welcher minimierte erste und zweite Oberflächenpositionsdatenpunkte umfasst (nicht in den Figuren gezeigt). Grafisch sieht der so minimierte Datensatz ähnlich aus wie der in Fig. 4 gezeigte reduzierte Datensatz 1C.

Im anschließenden Verfahrensschritt 151 kann ein Zurückspiegeln der minimierten ersten Oberflächenpositionsdatenpunkte um die Mittelebene M zurück auf die erste Brillenhälfte erfolgen, also im Beispiel in den negativen x-Bereich.

Beim Zurückspiegeln der minimierten ersten Oberflächenpositionsdatenpunkte in Verfahrensschritt 151 kann die Verkippung und/oder der Kippwinkel berücksichtigt werden, um so die Oberflächenpositionsdatenpunkte auf ihre korrekte Position zurückzuspiegeln.

**Fig. 5** zeigt die Datenpunkte nach dem Zurückspiegeln. Es ergibt sich dabei ein minimierter und zurückgespiegelter Datensatz 1D. Der minimierte und zurückgespiegelte Datensatz 1D umfasst minimierte und zurückgespiegelte erste Oberflächenpositionsdatenpunkte 14 und minimierte zweite Oberflächenpositionsdatenpunkte 24, wobei in Fig. 5 sämtliche minimierte und zurückgespiegelte Oberflächenpositionsdatenpunkte 14 und 24 durch gefüllte Kästchen gekennzeichnet sind.

Durch den minimierten und zurückgespiegelten Datensatz 1D werden zwei Ausgleichsfunktionen gelegt, nämlich eine erste minimierte Ausgleichsfunktion A_{M1} durch die minimierten und zurückgespiegelten ersten Oberflächenpositionsdatenpunkte 14 als eine erste Oberflächenfunktion für das erste Brillenglas und eine zweite minimierte Ausgleichsfunktion A_{M2} durch die minimierten zweiten Oberflächenpositionsdatenpunkte 24 als eine zweite Oberflächenfunktion für das erste Brillenglas. Das Ermitteln dieser minimierten Ausgleichsfunktionen A_{M1} und A_{M2} kann in einem Verfahrensschritt 160 erfolgen.

Im Ausführungsbeispiel können dazu minimierte Ausgleichspolynome verwendet werden, weswegen die minimierten Ausgleichsfunktionen nachfolgend auch als erstes und zweites minimiertes Ausgleichspolynom A_{M1} und A_{M2} bezeichnet werden.

Alternativ zum Ermitteln des ersten und zweiten minimierten Ausgleichspolynoms A_{M1} und A_{M2} kann auch lediglich eine einzige minimierte Ausgleichsfunktion A_{M} (nicht in den Figuren gezeigt, nachfolgend beispielhaft als minimiertes Ausgleichspolynom A_{M} bezeichnet) ermittelt werden durch die (noch nicht zurückgespiegelten, sondern noch immer überlagerten) minimierten ersten Oberflächenpositionsdatenpunkte und die minimierten zweiten Oberflächenpositionsdatenpunkte. Hierbei wird das minimierte Ausgleichspolynom A_{M} lediglich für die überlagerten und minimierten Oberflächenpositionsdatenpunkte in der zweiten Brillenhälfte ermittelt. Das minimierte Ausgleichspolynom A_{M} kann als die zweite Oberflächenfunktion für das zweite Brillenglas verwendet werden. Das minimierte Ausgleichspolynom A_{M} kann bezüglich der Mittelebene M (anstelle der minimierten ersten Oberflächenpositionsdatenpunkte) zurückgespiegelt werden in die erste Brillenhälfte, um dort die erste Oberflächenfunktion für das erste Brillenglas auszubilden.

Im Verfahrensschritt 170 wird zumindest ein Fassungsscheibenwinkel ermittelt. Bevorzugt kann ein erster und zweiter Fassungsscheibenwinkel für das erste und zweite Brillenglas ermittelt werden, z.B. auf Basis der ersten und zweiten Oberflächenfunktion. Der Fassungsscheibenwinkel wird auf Basis eines der Ausgleichspolynome ermittelt. Hierfür kann entweder das normale Ausgleichspolynom A verwendet werden, das optimierte Ausgleichspolynom Ao, das reduzierte Ausgleichspolynom A_{R}, oder bevorzugt zumindest das oder die minimierte(n) Ausgleichspolynom(e), d.h. z.B. das minimierte Ausgleichspolynom A_{M} oder das erste minimierte Ausgleichspolynom A_{M1} und das zweite minimierte Ausgleichspolynom A_{M2}. Allgemeiner kann dafür eine der entsprechenden Ausgleichsfunktionen verwendet werden.

Das Verfahren liefert zuverlässig gute Ergebnisse für den geometrischen Fassungsscheibenwinkel. Durch die Verkippung 130 und/oder die Optimierung der Verkippung in Verfahrensschritt 131 wird eine eventuelle Verkippung der Brillenfassung auf der Brillenaufnahme nahezu eliminiert. Hierbei wird die Verkippung an das aktuell verwendete Ausgleichspolynom angeglichen.

Die Filterung der Messdaten durch den Reduktionsschritt 140 erfolgt bevorzugt iterativ. Dabei können in einer Iterationsschleife so lange die Optimierung der Verkippung (Verfahrensschritt 131), die Berechnung des Ausgleichspolynoms (Verfahrensschritt 132 und/oder 141), und die Reduktion der Messwerte (Verfahrensschritt 140) wiederholt und berechnet, bis die maximale Abweichung der verbliebenen und gefilterten Oberflächenpositionsdatenpunkte den ersten Maximalabstand und/oder den zweiten Maximalabstand nicht mehr überschreitet.

Die abschließende Berechnung des Fassungsscheibenwinkels kann in den meisten Fällen, in einem Versuch in zumindest 97% der Fälle, ohne Nachmessungen durch einen Bediener als der tatsächliche Fassungsscheibenwinkel übernommen werden. Dadurch entfällt in fast allen Fällen eine bislang oft benötigte manuelle Nachmessung des Fassungsscheibenwinkels.

### Bezugszeichenliste

- 1: Datensatz
- 1A: überlagerter Datensatz
- 1B: überlagerter und optimiert verkippter Datensatz
- 1C: reduzierter Datensatz
- 1D: minimierter und zurückgespiegelter Datensatz

- 10: erste Oberflächenpositionsdatenpunkte
- 11: überlagerte erste Oberflächenpositionsdatenpunkte
- 12: optimiert verkippte erste Oberflächenpositionsdatenpunkte
- 13: reduzierte erste Oberflächenpositionsdatenpunkte
- 14: minimierte und zurückgespiegelte erste Oberflächenpositionsdatenpunkte
- 20: zweite Oberflächenpositionsdatenpunkte
- 21: überlagerte zweite Oberflächenpositionsdatenpunkte
- 22: optimiert verkippte zweite Oberflächenpositionsdatenpunkte
- 23: reduzierte zweite Oberflächenpositionsdatenpunkte
- 24: minimierte zweite Oberflächenpositionsdatenpunkte

- 100: Brille Anordnen
- 110: Scannen
- 120: Spiegeln und Überlagern
- 121: Ausgleichspolynom ermitteln

- 130: Verkippen
- 131: Verkippung optimieren
- 132: optimiertes Ausgleichspolynom ermitteln
- 140: Reduzieren
- 141: reduziertes Ausgleichspolynom ermitteln
- 142: Abfrage
- 143: Iteration des Reduktionsschritts
- 144: Iteration der Optimierung und des Reduktionsschritts
- 150: Minimieren
- 151: Zurückspiegeln
- 160: minimiertes Ausgleichspolynom ermitteln
- 161: FSW ermitteln

- A: Ausgleichspolynom
- A_{O}: optimiertes Ausgleichspolynom
- A_{R}: reduziertes Ausgleichspolynom
- A_{M}: minimiertes Ausgleichspolynom
- A_{M1}: erstes minimiertes Ausgleichspolynom
- A_{M2}: zweites minimiertes Ausgleichspolynom
- M: Mittelebene

## Patentansprüche

1. Verfahren zur Messung des Fassungsscheibenwinkels einer Brille mit den Schritten:
- Anordnen (100) der Brille, welche ein erstes Brillenglas und ein zweites Brillenglas aufweist, auf einer Brillenaufnahme;
- Scannen (110) der Brillenglasoberflächen beider Brillengläser der Brille mittels eines Scanners zur Erzeugung von ersten Oberflächenpositionsdatenpunkten des ersten Brillenglases und zweiten Oberflächenpositionsdatenpunkten des zweiten Brillenglases;
- Spiegeln (120) der ersten Oberflächenpositionsdatenpunkte des ersten Brillenglases auf die zweiten Oberflächenpositionsdatenpunkte des zweiten Brillenglases bezüglich einer Mittelebene (M) zwischen den beiden Brillengläsern derart, dass sich die ersten und zweiten Oberflächenpositionsdatenpunkte beider Brillengläser überlagern;
- Ermitteln (121) einer Ausgleichsfunktion (A) als Oberflächenfunktion durch die überlagerten Oberflächenpositionsdatenpunkten beider Brillengläser; und
- Ermitteln (160) des Fassungsscheibenwinkels mittels der Oberflächenfunktion durch die überlagerten Oberflächenpositionsdatenpunkte beider Brillengläser.

2. Verfahren nach Anspruch 1, wobei in den überlagerten Oberflächenpositionsdatenpunkten die ersten Oberflächenpositionsdatenpunkte gegenüber den zweiten Oberflächenpositionsdatenpunkten derart verkippt werden (130), dass die ersten und zweiten Oberflächenpositionsdatenpunkte näher an der ermittelten Oberflächenfunktion angeordnet sind.

3. Verfahren nach Anspruch 2, wobei die Verkippung der ersten Oberflächenpositionsdatenpunkte gegenüber den zweiten Oberflächenpositionsdatenpunkten dahingehend optimiert wird (131), dass die überlagerten ersten und zweiten Oberflächenpositionsdatenpunkte möglichst nah an einer optimierten Ausgleichsfunktion (A_{O}) als die Oberflächenfunktion durch die gegeneinander überlagerten und optimiert verkippten Oberflächenpositionsdatenpunkte beider Brillengläser angeordnet sind.

4. Verfahren nach einem der vorangegangenen Ansprüche, wobei in einem Reduktionsschritt (140) aus den überlagerten und ggf. verkippten Oberflächenpositionsdatenpunkten einzelne Oberflächenpositionsdatenpunkte entfernt werden, deren Abstand von der Oberflächenfunktion größer ist als ein vorbestimmter erster Maximalabstand, um so überlagerte und reduzierte Oberflächenpositionsdatenpunkte zu erhalten.

5. Verfahren nach Anspruch 4, wobei eine reduzierte Ausgleichsfunktion (A_{R}) als Oberflächenfunktion durch die überlagerten und reduzierten Oberflächenpositionsdatenpunkte beider Brillengläser ermittelt wird (141).

6. Verfahren nach Anspruch 5, wobei zumindest der Reduktionsschritt auf Basis der reduzierten Ausgleichsfunktion als die Oberflächenfunktion und auf Basis der reduzierten überlagerten Oberflächenpositionsdatenpunkte iteriert wird (143; 144).

7. Verfahren nach einem der Ansprüche 4 bis 6, wobei aus den überlagerten und reduzierten Oberflächenpositionsdatenpunkten einzelne Oberflächenpositionsdatenpunkte entfernt werden (150), deren Abstand von der Oberflächenfunktion größer ist als ein vorbestimmter zweiter Maximalabstand, wobei der zweite Maximalabstand kleiner als der erste Maximalabstand ausgebildet ist, um so minimierte Oberflächenpositionsdatenpunkte zu erhalten.

8. Verfahren nach Anspruch 7, wobei eine minimierte Ausgleichsfunktion (A_{M}; A_{M1}, A_{M2}) als die Oberflächenfunktion durch die minimierten Oberflächenpositionsdatenpunkte beider Brillengläser ermittelt wird (160).

9. Verfahren nach einem der vorangegangenen Ansprüche, wobei der Fassungsscheibenwinkel auf Basis der Oberflächenfunktion ermittelt wird, welche einer der folgenden Ausgleichsfunktionen entspricht:
a) der optimierten Ausgleichsfunktion (A_{O}),
b) der reduzierten Ausgleichsfunktion (A_{R}), oder
c) der minimierten Ausgleichsfunktion (A_{M}; A_{M1}, A_{M2}).

10. Verfahren nach einem der vorangegangenen Ansprüche, als Ausgleichsfunktion (A) ein Ausgleichspolynom ermittelt wird und gegebenenfalls:
a) als optimierte Ausgleichsfunktion (Ao) ein optimiertes Ausgleichspolynom, und/oder
b) als reduzierte Ausgleichsfunktion (A_{R}) ein reduzierte Ausgleichspolynom, und/oder
c) als minimierte Ausgleichsfunktion (A_{M}; A_{M1}, A_{M2}) ein minimiertes Ausgleichspolynom.

11. Verfahren nach einem der vorangegangenen Ansprüche, wobei vor dem Ermitteln des Fassungsscheibenwinkels für das erste Brillenglas die verbliebenen ersten Oberflächenpositionsdatenpunkte auf die zugehörige Brillenseite zurückgespiegelt werden.

12. Verfahren nach einem der vorangegangenen Ansprüche, wobei die Oberflächenpositionsdatenpunkte im Zweidimensionalen ermittelt werden.

13. Vorrichtung zur Messung des Fassungsscheibenwinkels einer Brille mit:
- einer Brillenaufnahme zum Aufnehmen der Brille, welche ein erstes Brillenglas und ein zweites Brillenglas aufweist;
- einem Scanner zum Scannen der Brillenglasoberflächen beider Brillengläser der auf der Brillenaufnahme angeordneten Brille und zur Erzeugung von ersten Oberflächenpositionsdatenpunkten des ersten Brillenglases und zweiten Oberflächenpositionsdatenpunkten des zweiten Brillenglaseses;
- einem Spiegelmodul, welches dazu konfiguriert ist, die ersten Oberflächenpositionsdatenpunkte des ersten Brillenglases auf die zweiten Oberflächenpositionsdatenpunkte des zweiten Brillenglases bezüglich einer Mittelebene zwischen den beiden Brillengläsern derart zu spiegeln, dass sich die ersten und zweiten Oberflächenpositionsdatenpunkte beider Brillengläser überlagern;
- einem Ausgleichsfunktionermittlungsmodul, welches dazu konfiguriert ist, eine Ausgleichsfunktion (A; Ao ;A_{OR}; A_{M}) als Oberflächenfunktion durch die überlagerten Oberflächenpositionsdatenpunkte beider Brillengläser zu ermitteln; und
- einem Fassungsscheibenwinkelermittlungsmodul, welches dazu konfiguriert ist, den Fassungsscheibenwinkel mittels der Oberflächenfunktion durch die überlagerten Oberflächenpositionsdatenpunkte beider Brillengläser zu ermitteln.

14. Vorrichtung nach Anspruch 13 mit zumindest einem der folgenden Module:
- einem Verkippungsmodul, welches dazu konfiguriert ist, in den überlagerten Oberflächenpositionsdatenpunkten die ersten Oberflächenpositionsdatenpunkte gegenüber den zweiten Oberflächenpositionsdatenpunkten derart zu verkippen, dass die ersten und zweiten Oberflächenpositionsdatenpunkte näher an der ermittelten Oberflächenfunktion angeordnet sind; und/oder
- einem Optimierungsmodul, welches dazu konfiguriert ist, die Verkippung der ersten Oberflächenpositionsdatenpunkte gegenüber den zweiten Oberflächenpositionsdatenpunkten dahingehend zu optimieren, dass die überlagerten ersten und zweiten Oberflächenpositionsdatenpunkte möglichst nah an einer optimierten Ausgleichsfunktion (A_{O}) als die Oberflächenfunktion durch die gegeneinander überlagerten und optimiert verkippten Oberflächenpositionsdatenpunkte beider Brillengläser angeordnet sind; und/oder
- einem Reduktionsmodul, welches dazu konfiguriert ist, in einem Reduktionsschritt aus den überlagerten Oberflächenpositionsdatenpunkten einzelne Oberflächenpositionsdatenpunkte zu entfernen, deren Abstand von der Oberflächenfunktion größer ist als ein vorbestimmter erster und/oder zweiter Maximalabstand; und/oder
- einem Iterationsmodul, welches dazu konfiguriert ist, zumindest den Reduktionsschritt auf Basis einer reduzierten Ausgleichsfunktion (A_{R}) durch vom Reduktionsmodul überlagerte und reduzierte Oberflächenpositionsdatenpunkte als die Oberflächenfunktion und auf Basis der überlagerten und reduzierten Oberflächenpositionsdatenpunkte zu iterieren.

15. Computerprogrammprodukt umfassend computerlesbare Programmteile, welche geladen und ausgeführt eine Vorrichtung nach Anspruch 13 oder 14 dazu bringen, ein Verfahren nach einem der Ansprüche 1 bis 12 durchzuführen, wobei das Computerprogrammprodukt die folgenden Einheiten zumindest teilweise steuert und/oder regelt:
- den Scanner; und
- das Spiegelmodul; und
- das Ausgleichsfunktionsermittlungsmodul; und
- das Fassungsscheibenwinkelermittlungsmodul;
wobei das Computerprogrammprodukt weiterhin insbesondere noch zumindest eine der folgenden Einheiten zumindest teilweise steuert und/oder regelt
- das Verkippungsmodul; und/oder
- das Optimierungsmodul; und/oder
- das Reduktionsmodul; und/oder
- das Iterationsmodul.

## Claims

1. Method for measuring the frame angle of a pair of glasses, comprising the steps:
- Placing (100) the eyeglasses, which have a first eyeglass lens and a second eyeglass lens, on an eyeglass holder;
- scanning (110) the lens surfaces of both lenses of the eyeglasses using a scanner to generate first surface position data points of the first lens and second surface position data points of the second lens;
- mirroring (120) the first surface position data points of the first lens onto the second surface position data points of the second lens with respect to a center plane (M) between the two lenses such that the first and second surface position data points of both lenses overlap;
- determining (121) a compensation function (A) as a surface function by the superimposed surface position data points of both lenses; and
- Determining (160) the frame disc angle by means of the surface function through the superimposed surface position data points of both lenses.

2. Method according to claim 1, wherein in the superimposed surface position data points, the first surface position data points are tilted (130) relative to the second surface position data points such that the first and second surface position data points are arranged closer to the determined surface function.

3. Method according to claim 2, wherein the tilting of the first surface position data points relative to the second surface position data points is optimized (131) such that the superimposed first and second surface position data points are arranged as close as possible to an optimized compensation function (A_{O} ) as the surface function by the superimposed and optimally tilted surface position data points of both eyeglass lenses.

4. Method according to one of the preceding claims, wherein in a reduction step (140), individual surface position data points whose distance from the surface function is greater than a predetermined first maximum distance are removed from the superimposed and, if necessary, tilted surface position data points in order to obtain superimposed and reduced surface position data points.

5. Method according to claim 4, wherein a reduced compensation function (A_{R}) is determined (141) as a surface function by the superimposed and reduced surface position data points of both lenses.

6. Method according to claim 5, wherein at least the reduction step is iterated (143; 144) based on the reduced compensation function as the surface function and based on the reduced superimposed surface position data points.

7. Method according to one of claims 4 to 6, wherein individual surface position data points are removed from the superimposed and reduced surface position data points (150) whose distance from the surface function is greater than a predetermined second maximum distance, wherein the second maximum distance is smaller than the first maximum distance, in order to obtain minimized surface position data points.

8. Method according to claim 7, wherein a minimized compensation function (A_{M} ; A_{M1} , A_{M2} ) is determined as the surface function by the minimized surface position data points of both eyeglass lenses (160).

9. Method according to one of the preceding claims, wherein the frame disc angle is determined based on the surface function, which corresponds to one of the following compensation functions:
a) the optimized compensation function (A_{O} ),
b) the reduced compensation function (A_{R} ), or
c) the minimized compensation function (A_{M} ; A_{M1} , A_{M2} ).

10. Method according to one of the preceding claims, wherein a compensation polynomial is determined as the compensation function (A) and, if necessary:
a) an optimized compensation polynomial is determined as the optimized compensation function (A_{O} ), and/or
b) a reduced compensation polynomial as a reduced compensation function (A_{R} ), and/or
c) a minimized compensation polynomial as a minimized compensation function (A_{M}; A_{M1}, A_{M2}).

11. Method according to one of the preceding claims, wherein, before determining the frame disc angle for the first lens, the remaining first surface position data points are reflected back to the corresponding lens side.

12. Method according to one of the preceding claims, wherein the surface position data points are determined in two dimensions.

13. Device for measuring the frame angle of a pair of glasses, comprising:
- a spectacle holder for holding the spectacles, which has a first spectacle lens and a second spectacle lens;
- a scanner for scanning the lens surfaces of both lenses of the glasses arranged on the glasses holder and for generating first surface position data points of the first lens and second surface position data points of the second lens;
- a mirror module configured to mirror the first surface position data points of the first lens onto the second surface position data points of the second lens with respect to a center plane between the two lenses in such a way that the first and second surface position data points of both lenses overlap;
- a compensation function determination module configured to determine a compensation function (A; Ao ;A_{OR} ; A_{M} ) as a surface function through the superimposed surface position data points of both lenses; and
- a frame disc angle determination module configured to determine the frame disc angle by means of the surface function through the superimposed surface position data points of both lenses.

14. Device according to claim 13 with at least one of the following modules:
- a tilting module configured to tilt the first surface position data points relative to the second surface position data points in the superimposed surface position data points such that the first and second surface position data points are arranged closer to the determined surface function; and/or
- an optimization module configured to optimize the tilting of the first surface position data points relative to the second surface position data points such that the superimposed first and second surface position data points are arranged as close as possible to an optimized compensation function (A_{O} ) as the surface function by the superimposed and optimally tilted surface position data points of both eyeglass lenses; and/or
- a reduction module configured to remove, in a reduction step, individual surface position data points from the superimposed surface position data points whose distance from the surface function is greater than a predetermined first and/or second maximum distance; and/or
- an iteration module configured to iterate at least the reduction step based on a reduced compensation function (A_{R}) by superimposing and reducing surface position data points from the reduction module as the surface function and based on the superimposed and reduced surface position data points.

15. Computer program product comprising computer-readable program parts which, when loaded and executed, cause a device according to claim 13 or 14 to perform a method according to one of claims 1 to 12, wherein the computer program product at least partially controls and/or regulates the following units:
- the scanner; and
- the mirror module; and
- the compensation function determination module; and
- the socket disc angle determination module;
wherein the computer program product furthermore controls and/or regulates at least one of the following units at least in part
- the tilt module; and/or
- the optimization module; and/or
- the reduction module; and/or
- the iteration module.

## Revendications

1. Procédé de mesure de l'angle de la monture de lunettes comprenant les étapes suivantes :
- Disposer (100) les lunettes, qui comprennent un premier verre de lunettes et un deuxième verre de lunettes, sur un support de lunettes ;
- Scanner (110) les surfaces des deux verres de lunettes des lunettes au moyen d'un scanner pour générer des premiers points de données de position de surface du premier verre de lunettes et des deuxièmes points de données de position de surface du deuxième verre de lunettes ;
- la réflexion (120) des premiers points de données de position de surface du premier verre de lunettes sur les deuxièmes points de données de position de surface du deuxième verre de lunettes par rapport à un plan médian (M) entre les deux verres de lunettes, de telle sorte que les premiers et deuxièmes points de données de position de surface des deux verres de lunettes se superposent ;
- déterminer (121) une fonction de compensation (A) en tant que fonction de surface par les points de données de position de surface superposés des deux verres de lunettes ; et
- Déterminer (160) l'angle de la monture au moyen de la fonction de surface par les points de données de position de surface superposés des deux verres de lunettes.

2. Procédé selon la revendication 1, dans lequel, dans les points de données de position de surface superposés, les premiers points de données de position de surface sont basculés (130) par rapport aux deuxièmes points de données de position de surface de telle sorte que les premiers et deuxièmes points de données de position de surface sont disposés plus près de la fonction de surface déterminée.

3. Procédé selon la revendication 2, dans lequel l'inclinaison des premiers points de données de position de surface par rapport aux deuxièmes points de données de position de surface est optimisée (131) de sorte que les premiers et deuxièmes points de données de position de surface superposés sont disposés aussi près que possible d'une fonction de compensation optimisée (Ao) en tant que fonction de surface par les points de données de position de surface superposés les uns aux autres et inclinés de manière optimisée des deux verres de lunettes.

4. Procédé selon l'une des revendications précédentes, dans lequel, dans une étape de réduction (140), on élimine des points de données de position de surface superposés et éventuellement inclinés des points de données de position de surface individuels dont la distance à la fonction de surface est supérieure à une première distance maximale prédéterminée, afin d'obtenir ainsi des points de données de position de surface superposés et réduits.

5. Procédé selon la revendication 4, dans lequel une fonction de compensation réduite (A_{R}) est déterminée (141) en tant que fonction de surface par les points de données de position de surface superposés et réduits des deux verres de lunettes.

6. Procédé selon la revendication 5, dans lequel au moins l'étape de réduction est itérée (143 ; 144) sur la base de la fonction de compensation réduite en tant que fonction de surface et sur la base des points de données de position de surface superposés réduits.

7. Procédé selon l'une quelconque des revendications 4 à 6, dans lequel on élimine (150) des points de données de position de surface superposés et réduits des points de données de position de surface individuels dont la distance à la fonction de surface est supérieure à une deuxième distance maximale prédéterminée, la deuxième distance maximale étant configurée pour être inférieure à la première distance maximale, de manière à obtenir des points de données de position de surface minimisés.

8. Procédé selon la revendication 7, dans lequel une fonction de compensation minimisée (A_{M}; A_{M1}, A_{M2}) est déterminée (160) comme la fonction de surface par les points de données de position de surface minimisés des deux verres de lunettes.

9. Procédé selon l'une quelconque des revendications précédentes, dans lequel l'angle de la monture est déterminé sur la base de la fonction de surface correspondant à l'une des fonctions de compensation suivantes :
a) la fonction de compensation optimisée (Ao),
b) la fonction de compensation réduite (A_{R)} , ou
c) la fonction de compensation minimisée (A_{M}; A_{M1}, A_{M2}) .

10. Procédé selon l'une des revendications précédentes, on détermine comme fonction d'équilibrage (A) un polynôme d'équilibrage et éventuellement :
a) comme fonction d'équilibrage optimisée (Ao), un polynôme d'équilibrage optimisé, et/ou
b) comme fonction d'équilibrage réduite (A_{R}) un polynôme d'équilibrage réduit, et/ou
c) comme fonction de compensation minimisée (A_{M}; A_{M1}, A_{M2}) un polynôme de compensation minimisé.

11. Procédé selon l'une des revendications précédentes, dans lequel, avant de déterminer l'angle de la monture pour le premier verre de lunettes, les premiers points de données de position de surface restants sont réfléchis sur le côté de lunettes correspondant.

12. Procédé selon l'une des revendications précédentes, dans lequel les points de données de position de surface sont déterminés en deux dimensions.

13. Dispositif de mesure de l'angle de la monture de lunettes comprenant :
- une monture de lunettes destinée à recevoir les lunettes, qui comprend un premier verre de lunettes et un deuxième verre de lunettes ;
- un scanner pour balayer les surfaces des verres de lunettes des deux verres de lunettes disposés sur le support de lunettes et pour générer des premiers points de données de position de surface du premier verre de lunettes et des deuxièmes points de données de position de surface du deuxième verre de lunettes ;
- un module miroir configuré pour réfléchir les premiers points de données de position de surface du premier verre de lunettes sur les seconds points de données de position de surface du second verre de lunettes par rapport à un plan médian entre les deux verres de lunettes, de telle sorte que les premiers et seconds points de données de position de surface des deux verres de lunettes se superposent ;
- un module de détermination de fonction de compensation configuré pour déterminer une fonction de compensation (A ; A(o) ; _{A(OR)}; A_{M}) en tant que fonction de surface par les points de données de position de surface superposés des deux verres de lunettes ; et
- un module de détermination de l'angle de la monture configuré pour déterminer l'angle de la monture au moyen de la fonction de surface par les points de données de position de surface superposés des deux verres de lunettes.

14. Dispositif selon la revendication 13, comprenant au moins l'un des modules suivants :
- un module d'inclinaison configuré pour incliner, dans les points de données de position de surface superposés, les premiers points de données de position de surface par rapport aux seconds points de données de position de surface de telle sorte que les premiers et seconds points de données de position de surface soient plus proches de la fonction de surface déterminée ; et/ou
- un module d'optimisation configuré pour optimiser l'inclinaison des premiers points de données de position de surface par rapport aux seconds points de données de position de surface de telle sorte que les premiers et seconds points de données de position de surface superposés soient disposés le plus près possible d'une fonction de compensation optimisée (Ao) en tant que fonction de surface par les points de données de position de surface des deux verres de lunettes superposés l'un à l'autre et inclinés de manière optimisée ; et/ou
- un module de réduction configuré pour éliminer, dans une étape de réduction, des points de données de position de surface superposés, les points de données de position de surface individuels dont la distance par rapport à la fonction de surface est supérieure à une première et/ou une deuxième distance maximale prédéterminée ; et/ou
- un module d'itération configuré pour itérer au moins l'étape de réduction sur la base d'une fonction d'égalisation réduite (A_{R}) par points de données de position de surface superposés et réduits par le module de réduction comme la fonction de surface et sur la base des points de données de position de surface superposés et réduits.

15. Produit programme d'ordinateur comprenant des parties de programme lisibles par ordinateur qui, chargées et exécutées, amènent un dispositif selon la revendication 13 ou 14 à mettre en œuvre un procédé selon l'une quelconque des revendications 1 à 12, dans lequel le produit programme d'ordinateur commande et/ou régule au moins partiellement les entités suivantes :
- le scanner ; et
- le module miroir ; et
- le module de détermination de la fonction de compensation ; et
- le module de détermination de l'angle de la vitre de la monture ;
le produit programme d'ordinateur commandant et/ou régulant en outre notamment encore au moins partiellement au moins l'une des unités suivantes
- le module d'inclinaison ; et/ou
- le module d'optimisation ; et/ou
- le module de réduction ; et/ou
- le module d'itération.
